# EUROPEAN PATENT APPLICATION

(11) **EP 4 847 996 A1**
(43) Date of publication of application: **02.12.2026**
(21) Application number: 26173697.9
(22) Date of filing: 21.04.2026
(51) Int. Cl.: G03B 21/20

(54) **HOLDER, DICHROIC MODULE AND PROJECTION DEVICE**

(30) Priority: 26.05.2025 US 202563811926 P; 19.08.2025 TW 114208755 U
(71) Applicant: Coretronic Corporation, Hsin-Chu 300 (TW)
(72) Inventor: LEE, Hung-Lin, 300 Hsin-Chu (TW)
(74) Representative: Ter Meer und Partner mbB

(57) **Abstract**

The present disclosure provides a holder, a dichroic module, and a projection device. The holder is configured to secure dichroic elements and comprises a main body, a first fixing part, a second fixing part, a first bearing part, and a second bearing part. The main body is a frame having a penetrating hole and includes opposite terminals along a first axial direction. The first and second fixing parts extend outward from the terminals, with the penetrating hole positioned therebetween. The first and second bearing parts are disposed on the main body and extend from an inner wall toward the penetrating hole, respectively providing a first bearing surface and a second bearing surface. The first and second bearing surfaces are located on corresponding reference surfaces that define an intersection angle, enabling precise positioning of dichroic elements for use in optical modules such as projection devices.

## Description

This application claims priority of United States provisional application serial no. 63/811,926, filed on May 26th, 2025, and Taiwan application serial no. 114208755, filed on August 19th, 2025.

### Technical Field

The disclosure relates to a supporting structure, and more particularly to a holder, a dichroic module, and a projection device.

### Description of Related Art

In certain projection devices, light beams with different colors provided by a light-emitting module are separated and combined by optical elements arranged within the projection device. A common approach is to place a dichroic element in the light path to perform color separation and combination. For example, a first color beam from a first light-emitting unit may pass through the dichroic element, while a second color beam and/or a third color beam from a second and/or third light-emitting unit may be reflected and redirected by the dichroic element. The beams are then combined by other optical elements to form an illuminating beam. The illuminating beam is delivered to a light valve module, where imaging components convert the illuminating beam into an image beam. The image beam is subsequently directed to a projection lens, and the projection lens projects the image beam out of the projection device to form a projection image.

A dichroic element may be designed as a single optical component formed by a coating process. Since a single-piece dichroic element is required to reflect two different color beams, its shape is generally designed as a wedge. Accordingly, when the single-piece dichroic element is to be mounted on the base of a projection device, grooves must be formed in the base according to the shape of the dichroic element. The single-piece dichroic element is then positioned and fixed by inserting it into these grooves. To accommodate the wedge-shaped configuration of the dichroic element, the base must include a wide groove corresponding to the longer side of the dichroic element and a narrow groove corresponding to the shorter side of the dichroic element.

In another approach, the dichroic element is designed as a combination of two optical components, each configured to reflect a single color beam. Specifically, along the transmission path of the beams, a first dichroic element and a second dichroic element are arranged, both of which are adapted to allow the first color beam emitted from the first light-emitting unit to pass through. The second dichroic element is disposed between the first dichroic element and the second and/or third light-emitting units. The first dichroic element is capable of reflecting one of the second color beam and the third color beam, while the second dichroic element reflects the other. Through this arrangement, the optical paths of the three color beams can be combined to form the illuminating beam.

However, in the single-piece dichroic element architecture, although the slot-based fixing method provides structural stability and ease of assembly, the manufacturing cost of the element itself is relatively high. When the projection device instead adopts a two-piece dichroic element architecture, the component cost can be reduced. Nevertheless, due to optical path design requirements, an intersection angle must be maintained between the first dichroic element and the second dichroic element. This results in an excessively narrow space between the first dichroic element and the second dichroic element when both mounted on the base, leading to incomplete fixing structures. In such cases, the dichroic elements can only be partially fixed to the base in localized areas rather than being securely fixed over a large surface, thereby increasing the risk of detachment. In addition, during the assembly process, the dichroic elements are prone to tilting, making it difficult to satisfy optical design precision. Assembly is also inconvenient, often requiring additional assembly jigs.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The present disclosure provides a holder configured to secure two dichroic elements.

It is an object to provide a holder allowing a more convenient assembly.

The object is solved by the features of the independent claims. Preferred embodiments are given in the dependent claims.

The holder comprises a main body, a first fixing part, a second fixing part, a first bearing part, and a second bearing part. The main body is a frame having a penetrating hole and includes opposite first and second terminals along a first axial direction. The first fixing part extends outward from the first terminal along the first axial direction, and the second fixing part extends outward from the second terminal along the first axial direction, with the penetrating hole positioned therebetween. The first bearing part is disposed on the main body and extends from an inner wall of the main body toward the penetrating hole, and includes a first bearing surface. The second bearing part is disposed on the main body and extends from the inner wall toward the penetrating hole, and includes a second bearing surface.

The first bearing surface may be located on a first reference surface.

The second bearing surface may be located on a second reference surface.

The first reference surface and the second reference surface may define an intersection angle.

To achieve one or more of the above-mentioned objectives or other objectives, the disclosure further provides a dichroic module, comprising the aforementioned holder, a first dichroic element, and a second dichroic element. The first dichroic element is disposed on the holder and abuts against the first bearing surface of the first bearing part. The second dichroic element is disposed on the holder and abuts against the second bearing surface of the second bearing part.

To achieve one or more of the above-mentioned objectives or other objectives, the disclosure further provides a projection device, comprising an illuminating module, a light valve module, and a projection lens. The illuminating module is configured to provide an illuminating beam. The light valve module is disposed in the transmission path of the illuminating beam and is configured to convert the illuminating beam into an image beam. The projection lens is disposed in the transmission path of the image beam and is configured to project the image beam out of the projection device. The illuminating module comprises a base, a plurality of illuminating elements, the aforementioned holder, a first dichroic element, and a second dichroic element. The base has an accommodation space. The plurality of illuminating elements are respectively disposed on an outer wall of the base and are configured to provide a first color beam, a second color beam, and a third color beam toward the accommodation space. The holder is disposed in the accommodation space of the base and is mounted via the first fixing part and the second fixing part. The first dichroic element is disposed on the holder and abuts against the first bearing surface of the first bearing part. The second dichroic element is disposed on the holder and abuts against the second bearing surface of the second bearing part. The first dichroic element and the second dichroic element together with the holder form a dichroic module. The dichroic module is located in the transmission paths of the first color beam, the second color beam, and the third color beam so that the three color beams are combined by the dichroic module to form the illuminating beam.

In one or more embodiments, the first bearing part may define a first opening on the first reference surface.

In one or more embodiments, the second bearing part may define a second opening on the second reference surface.

In one or more embodiments, an area of the first opening may be greater than an area of the second opening.

In one or more embodiments, a connection between the first bearing surface and the inner wall near the first terminal may define a first junction.

In one or more embodiments, a connection between the second bearing surface and the inner wall near the first terminal may define a second junction.

In one or more embodiments, an inner wall height may be defined between the first junction and the second junction.

In one or more embodiments, the holder may comprise a plurality of bumps respectively disposed on the main body and protruding from the inner wall of the main body toward the penetrating hole along a second axial direction.

In one or more embodiments, along the second axial direction, the plurality of bumps may protrude from the inner wall by a first protrusion height that is less than a second protrusion height by which the second bearing part protrudes from the inner wall.

In one or more embodiments, the first axial direction may be perpendicular to the second axial direction.

In one or more embodiments, the plurality of bumps may be respectively connected to the first bearing part such that the first bearing part and the plurality of bumps form a plurality of first filling surfaces connected to the first bearing surface on the first reference surface.

In one or more embodiments, the second bearing part and the plurality of bumps may form a plurality of second filling surfaces connected to the second bearing surface on the second reference surface.

In one or more embodiments, the intersection angle may be between 6.3° and 7.2°.

In one or more embodiments, a size of the second dichroic element may be smaller than a size of the first dichroic element.

In one or more embodiments, the inner wall height may be greater than or equal to a height of the second dichroic element.

In one or more embodiments, the plurality of first filling surfaces, the first dichroic element, and the inner wall of the main body together may form a plurality of first filling grooves.

In one or more embodiments, the plurality of first filling grooves may be configured to receive an adhesive for securing the first dichroic element.

In one or more embodiments, the plurality of second filling surfaces, the second dichroic element, and the inner wall of the main body together may form a plurality of second filling grooves.

In one or more embodiments, the plurality of second filling grooves may be configured to receive another adhesive for securing the second dichroic element.

In one or more embodiments, the plurality of illuminating elements may comprise a first illuminating element, a second illuminating element, and a third illuminating element, configured to respectively provide the first color beam, the second color beam, and the third color beam.

In one or more embodiments, the first dichroic element may be arranged toward the third illuminating element, and the second dichroic element may be arranged toward the first illuminating element and the second illuminating element.

In one or more embodiments, the first dichroic element may be configured to reflect the first color beam and transmitted by the third color beam.

In one or more embodiments, the second dichroic element may be configured to reflect the second color beam and transmitted by the third color beam.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

FIG. 1 is a perspective view of the holder of the present disclosure.
FIG. 2 is a front view of the holder of the present disclosure.
FIG. 3 is a sectional view of the holder along line A-A.
FIG. 4 is an exploded view of the dichroic module of the present disclosure.
FIG. 5 is a front view of the dichroic module of the present disclosure.
FIG. 6 is a sectional view of the dichroic module along line B-B in FIG 5.
FIG. 7 is a front view of the holder combined with the second dichroic element.
FIG. 8 is a top view of the projection device of the present disclosure.
FIG. 9 is a perspective view of the illuminating module of the present disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Unless limited otherwise, the terms "connected," "coupled," and "mounted," and variations thereof herein are used broadly and encompass direct and indirect connections, couplings, and mountings. Accordingly, the drawings and descriptions will be regarded as illustrative in nature and not as restrictive.

The main object of the present disclosure is to provide a holder configured to securely hold two dichroic elements, thereby reducing component costs, improving assembly stability and precision, and facilitating ease of assembly.

Other objects and advantages of the present disclosure can be further understood from the technical features disclosed herein.

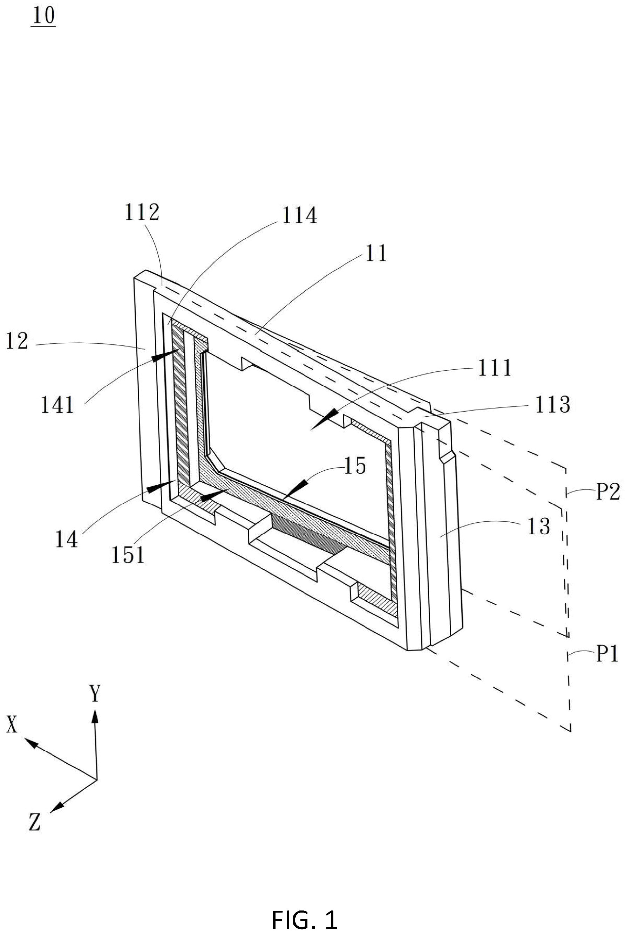

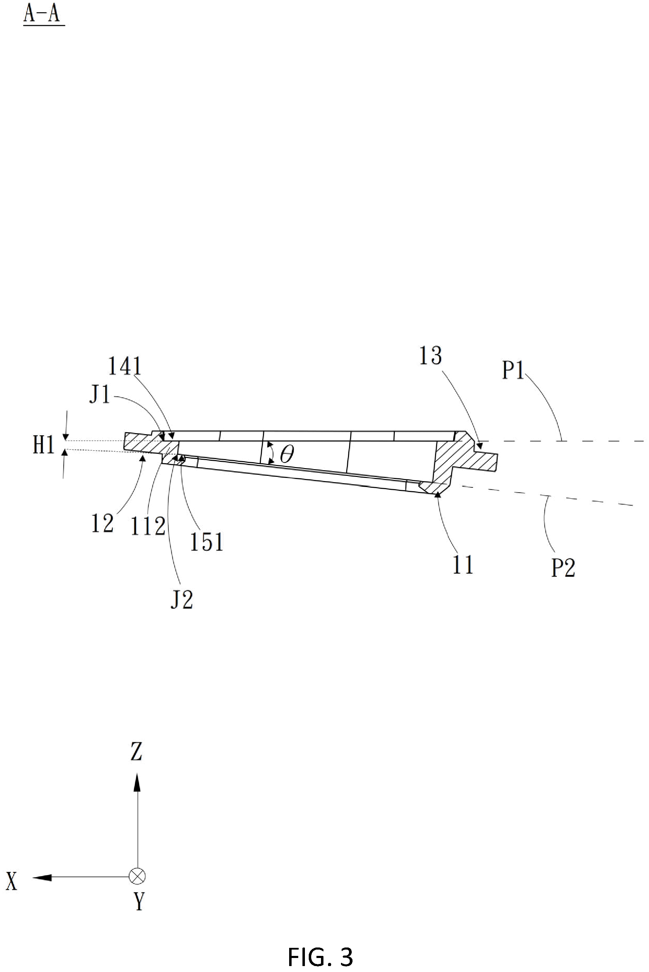

Figures 1, 2, and 3 illustrate a perspective view, a front view, and a sectional view along line A-A, respectively, of a holder according to an embodiment of the present disclosure. The holder 10 is configured to secure two dichroic elements and comprises a main body 11, a first fixing part 12, a second fixing part 13, a first bearing part 14, and a second bearing part 15. The main body 11 is a frame having a penetrating hole 111 and includes opposite first and second terminals 112 and 113 along a first axial direction X. The first fixing part 12 extends outward from the first terminal 112 of the main body 11 along the first axial direction X, and the second fixing part 13 extends outward from the second terminal 113 of the main body 11 along the first axial direction X, with the penetrating hole 111 positioned therebetween. The first bearing part 14 is disposed on the main body 11 and extends from an inner wall 114 of the main body 11 toward the penetrating hole 111. The first bearing part 14 includes a first bearing surface 141. The second bearing part 15 is disposed on the main body 11 and extends from the inner wall 114 of the main body 11 toward the penetrating hole 111. The second bearing part 15 includes a second bearing surface 151. The first bearing surface 141 is located on a first reference surface P1, and the second bearing surface 151 is located on a second reference surface P2, with the first reference surface P1 and the second reference surface P2 defining an intersection angle θ. In one embodiment, the intersection angle θ is between 6.3° and 7.2°, but is not limited thereto. In this embodiment, the first reference surface P1 and the second reference surface P2 are virtual surfaces used merely to illustrate the relative relationship between the first bearing surface 141 and the second bearing surface 151. The holder 10 of the present disclosure does not include the first reference surface P1 nor the second reference surface P2.

The first bearing part 14 and the second bearing part 15 allow two dichroic elements to abut correspondingly against the first bearing surface 141 of the first bearing part 14 and the second bearing surface 151 of the second bearing part 15. Since the first bearing surface 141 and the second bearing surface 151 are respectively located on the first reference surface P1 and the second reference surface P2, and the first reference surface P1 and the second reference surface P2 define an intersection angle θ, when the two dichroic elements abut against the first bearing surface 141 of the first bearing part 14 and the second bearing surface 151 of the second bearing part 15, the two dichroic elements also form the intersection angle θ relative to each other. This configuration enables the intersection angle θ of the holder 10 to be adjusted to meet different optical path design requirements. Compared with the existing single-piece dichroic element design, the holder 10 of the present disclosure is easier to manufacture and provides higher precision. Furthermore, the design of the first bearing part 14 and the second bearing part 15 increases the contact area between the two dichroic elements and the holder 10, thereby enhancing fixation stability.

In this embodiment, the main body 11 is a rectangular frame with a penetrating hole 111 at its center. The first axial direction X corresponds to the longitudinal direction of the rectangle, and the second axial direction Y corresponds to the transverse direction of the rectangle. The penetrating hole 111 extends through the main body 11 along a direction perpendicular to both the longitudinal direction and the transverse direction (e.g., a third axial direction Z). The first axial direction X and the second axial direction Y are perpendicular to each other. In other embodiments, the main body 11 may have other frame shapes and is not limited to the rectangular configuration described above.

In one embodiment, the first bearing part 14 defines a first opening 142 on the first reference surface P1, and the second bearing part 15 defines a second opening 152 on the second reference surface P2. In one embodiment, the area of the first opening 142 is larger than that of the second opening 152. The first opening 142 and the second opening 152 allow light to pass through.

Specifically, the first bearing part 14 is a flange extending from the inner wall 114 of the main body 11 toward the penetrating hole 111 along the first axial direction X. The second bearing part 15 is a flange extending from the inner wall 114 of the main body 11 toward the penetrating hole 111, with a portion extending along a direction forming an intersection angle θ relative to the first axial direction X, and another portion extending along the second axial direction Y. The first bearing surface 141 and the second bearing surface 151 face the same direction (e.g., the third axial direction Z). The first bearing surface 141 of the first bearing part 14 surrounds at least part of the first opening 142, and the second bearing surface 151 of the second bearing part 15 surrounds the second opening 152. The first bearing surface 141 and parts of the second bearing surface 151 form a stepped structure. The length of the first opening 142 along the first axial direction X is greater than that of the second opening 152, and the width of the first opening 142 along the second axial direction Y is greater than that of the second opening 152. In this embodiment, the two dichroic elements may have different sizes, with one dichroic element smaller than the first opening 142 so that it can be installed through the first opening 142 and abut against the second bearing surface 151. The other dichroic element is larger than the first opening 142 and can be installed to abut against the first bearing surface 141.

Accordingly, when the two dichroic elements are installed on the holder 10, both dichroic elements can be sequentially assembled from the same side of the holder 10, thereby simplifying the assembly process. However, this is not limiting. In other embodiments, both the first bearing surface 141 and the second bearing surface 151 may face away from the third axial direction Z. In other embodiments, the first bearing surface 141 may face toward the third axial direction Z while the second bearing surface 151 faces away from the third axial direction Z, allowing the two dichroic elements to be assembled from opposite sides of the holder 10.

In one embodiment, the connection between the first bearing surface 141 and the inner wall 114 near the first terminal 112 is defined as a first junction J1, and the connection between the second bearing surface 151 and the inner wall 114 near the first terminal 112 is defined as a second junction J2. An inner wall height H1 is defined between the first junction J1 and the second junction J2.

In one embodiment, the holder 10 further includes a plurality of bumps 16. The plurality of bumps 16 are respectively disposed on the main body 11 and protrude from the inner wall 114 of the main body 11 toward the penetrating hole 111 along the second axial direction Y. Along the second axial direction Y, the protrusion height of the plurality of bumps 16 from the inner wall 114 is defined as a first protrusion height W1, and the protrusion height of the second bearing surface 151 of the second bearing part 15 from the inner wall 114 is defined as a second protrusion height W2, wherein the first protrusion height W1 is smaller than the second protrusion height W2. In this embodiment, the plurality of bumps 16 are arranged with spacing between each other.

In one embodiment, the plurality of bumps 16 are respectively connected to the first bearing part 14, such that the first bearing part 14 and the plurality of bumps 16 form a plurality of first filled surfaces 143 connected to the first bearing surface 141 on the first reference surface P1. The second bearing part 15 and the plurality of bumps 16 form a plurality of second filled surfaces 153 connected to the second bearing surface 151 on the second reference surface P2. A first portion of the first filled surfaces 143 is disposed near the first terminal 112, and a second portion of the first filled surfaces 143 is disposed near the second terminal 113. The plurality of second filled surfaces 153 are disposed between the first portion and the second portion of the first filled surfaces 143.

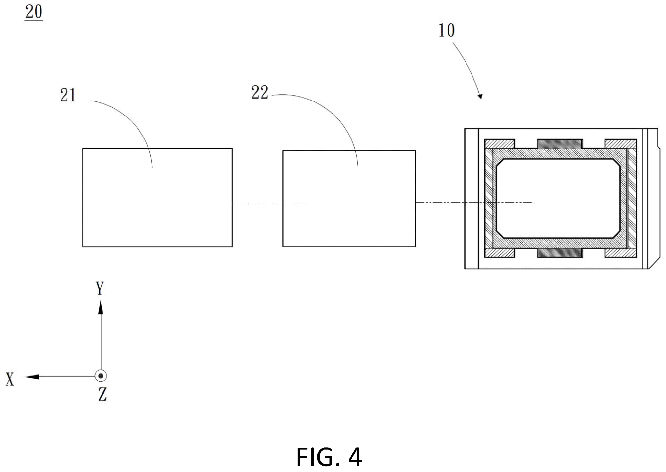

Figure 4 is an exploded view of the dichroic module according to the present disclosure. Referring to Figure 4, in one embodiment, the dichroic module 20 includes the aforementioned holder 10, a first dichroic element 21, and a second dichroic element 22. The first dichroic element 21 is disposed on the holder 10 and abuts against the first bearing surface 141 of the first bearing part 14. The second dichroic element 22 is disposed on the holder 10 and abuts against the second bearing surface 151 of the second bearing part 15.

In one embodiment, the second dichroic element 22 has a smaller size than the first dichroic element 21, and the size of the second dichroic element 22 is smaller than the area of the first opening 142, whereas the size of the first dichroic element 21 is larger than the area of the first opening 142. Accordingly, when the first dichroic element 21 and the second dichroic element 22 are installed on the holder 10, the second dichroic element 22 can first pass through the first opening 142 to reach the second bearing surface 151, thereby abutting against the second bearing surface 151, and then the first dichroic element 21 can be installed to abut against the first bearing surface 141.

In one embodiment, the first dichroic element 21 and the second dichroic element 22 can each be a dichroic mirror or a dichroic beam splitter, but are not limited thereto.

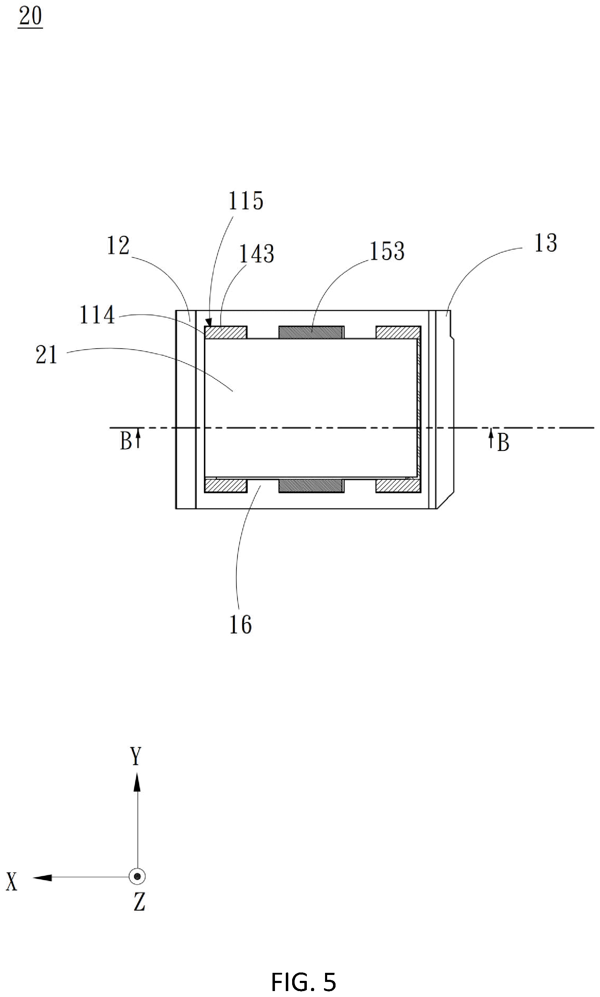

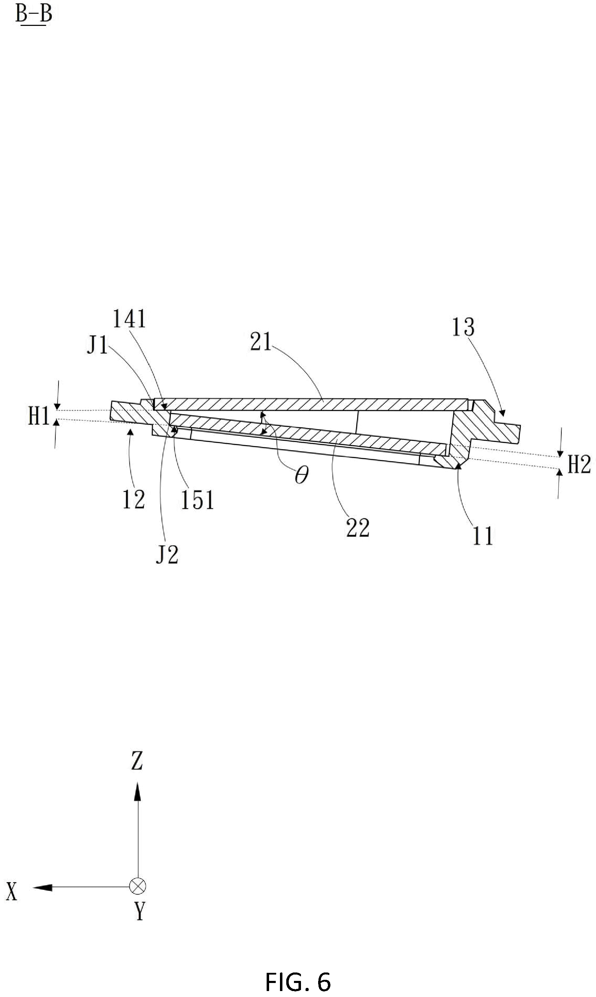

Figures 5 and 6 illustrate a front view and a B-B cross-sectional view of the dichroic module 20, respectively. In one embodiment, the connection between the first bearing surface 141 and the inner wall 114 near the first terminal 112 is a first junction J1, and the connection between the second bearing surface 151 and the inner wall 114 near the first terminal 112 is a second junction J2. An inner wall height H1 is defined between the first junction J1 and the second junction J2, and the inner wall height H1 is greater than or equal to the height H2 of the second dichroic element 22. Specifically, by having the inner wall height H1 greater than or equal to the height H2 of the second dichroic element 22, a buffer height is provided between the first dichroic element 21 and the second dichroic element 22. This prevents the first dichroic element 21 and the second dichroic element 22 from contacting each other during installation on the holder 10. Such contact could lead to collisions between the first dichroic element 21 and the second dichroic element 22 if the holder 10 experiences vibrations or shaking, potentially causing damage. The design of the holder 10 according to the present disclosure prevents such collision-induced damage due to vibration.

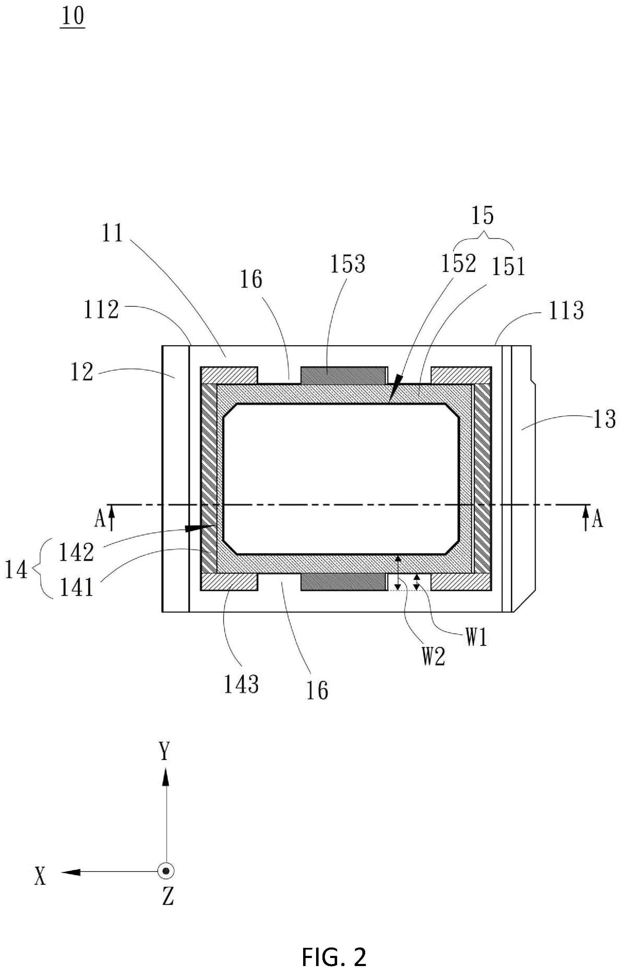

In one embodiment, the holder 10 further includes a plurality of bumps 16. The plurality of bumps 16 are respectively disposed on the main body 11 and protrude from the inner wall 114 of the main body 11 toward the penetrating hole 111 along the second axial direction Y. Along the second axial direction Y, the first protrusion height W1 of each bump 16 from the inner wall 114 is less than the second protrusion height W2 of the second bearing surface 151 from the inner wall 114 (see Figure 2).

In one embodiment, the plurality of bumps 16 are respectively connected to the first bearing part 14, such that the first bearing part 14 together with the plurality of bumps 16 forms a plurality of first filled surfaces 143 connected to the first bearing surface 141 on the first reference surface P1. The second bearing part 15 together with the plurality of bumps 16 forms a plurality of second filled surfaces 153 connected to the second bearing surface 151 on the second reference surface P2.

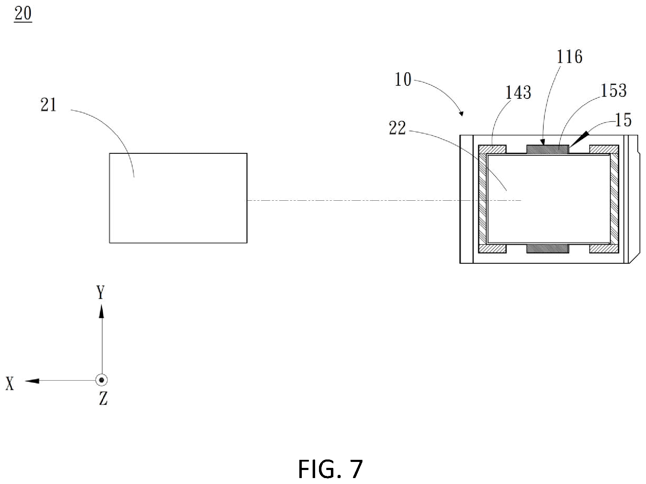

Figure 7 is a front view of the holder combined with the second dichroic element. As shown in Figures 5 and 7, in one embodiment, the plurality of first filled surfaces 143, the first dichroic element 21, and the inner wall 114 of the main body 11 form a plurality of first filling grooves 115. The plurality of first filling grooves 115 are suitable for being filled with an adhesive material to fix the first dichroic element 21. The plurality of second filled surfaces 153, the second dichroic element 22, and the inner wall 114 of the main body 11 form a plurality of second filling grooves 116. The plurality of second filling grooves 116 are suitable for being filled with an adhesive material to fix the second dichroic element 22.

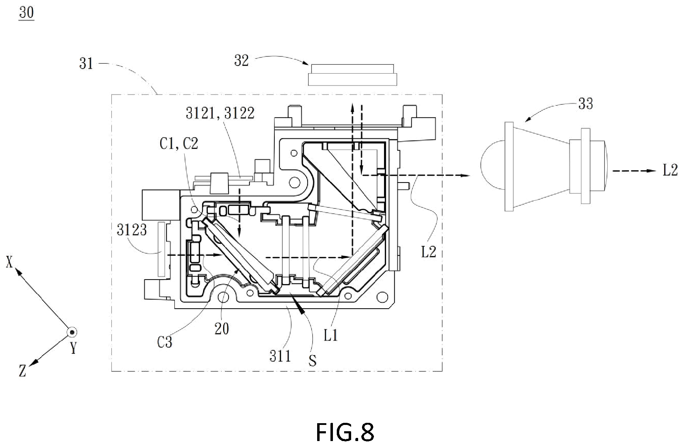

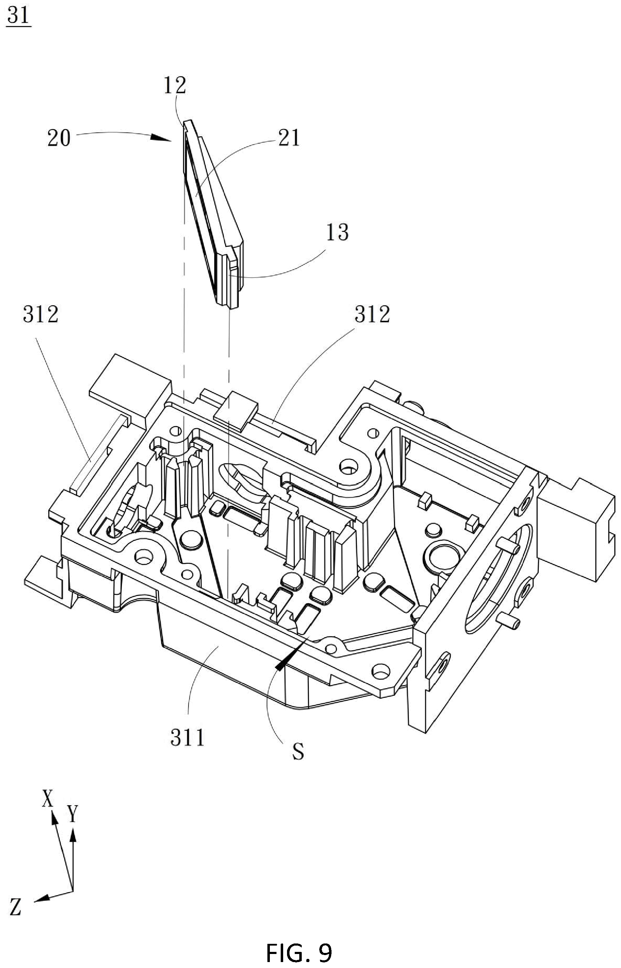

Figure 8 is a top view of the projection device of the present disclosure. Figure 9 is a perspective view of the illuminating module of the present disclosure. In FIGS. 8 and 9, the first axial direction X, the second axial direction Y, and the third axial direction Z are illustrated based on the three axes of the holder 10. In one embodiment of the projection device 30 of the present disclosure, as shown in Figures 6, 8, and 9, the projection device 30 includes an illuminating module 31, a light valve module 32, and a projection lens 33. The illuminating module 31 is adapted to provide an illuminating beam L1. The light valve module 32 is located in the transmission path of the illuminating beam L1 and is adapted to convert the illuminating beam L1 into an image beam L2. The projection lens 33 is located in the transmission path of the image beam L2 and is adapted to project the image beam L2 out of the projection device 30.

In one embodiment, the light valve module 32 includes at least one light valve for converting the illuminating beam L1 into the image beam L2. The light valve may be, for example, a reflective modulator such as a digital micro-mirror device (DMD) or a liquid-crystal-on-silicon (LCOS) panel. In other embodiments, the light valve may also be a transmissive modulator, such as a transparent liquid crystal panel, an electro-optical modulator, a magneto-optic modulator, an acousto-optic modulator (AOM), or other types of spatial light modulators (SLM). The present disclosure does not limit the type or configuration of the light valve.

In one embodiment, the projection lens 33 may include one or more optical lenses having diopter, such as combinations of non-planar lenses including biconcave lenses, biconvex lenses, concave-convex lenses, convex-concave lenses, plano-convex lenses, and plano-concave lenses. The present disclosure does not limit the type or configuration of the projection lens 33.

In one embodiment, the illuminating module 31 includes a base 311 and a plurality of illuminating elements 312. The base 311 has an accommodation space S. The plurality of illuminating elements 312 are respectively disposed on the outer wall of the base 311 and are configured to provide a first color beam C1, a second color beam C2, and a third color beam C3 toward the accommodation space S. The holder 10 is disposed within the accommodation space S of the base 311 and is mounted to the base 311 via the first fixing part 12 and the second fixing part 13. As described above, the first dichroic element 21 is disposed on the holder 10 and abuts against the first bearing surface 141 of the first bearing part 14. The second dichroic element 22 is disposed on the holder 10 and abuts against the second bearing surface 151 of the second bearing part 15. The first dichroic element 21, the second dichroic element 22, and the holder 10 together form a dichroic module 20. The dichroic module 20 is positioned in the transmission path of the first color beam C1, the second color beam C2, and the third color beam C3, so that the first color beam C1, the second color beam C2, and the third color beam C3 are combined by the dichroic module 20 to form the illuminating beam L1.

Specifically, the first fixing part 12 and the second fixing part 13 are configured to mount the holder 10 onto the base 311. In some embodiments, the first fixing part 12 and the second fixing part 13 may each be a flange extending outward from the first terminal 112 and the second terminal 113, respectively. In the present embodiment, the first fixing part 12 and the second fixing part 13 may have a rectangular flange shape, but the flange shape is not limited thereto. Moreover, by utilizing the flange design of the first fixing part 12 and the second fixing part 13, corresponding grooves with matching geometries can be formed in the base 311 of the projection device 30, thereby achieving a secure fixation of the dichroic module 20. Thus, when the dichroic module 20 is assembled with the base 311, the first fixing part 12 and the second fixing part 13 can be assembled along the second axial direction Y according to the grooves formed in the base 311. The holder 10 and the dichroic module 20 of the present disclosure are not only easy to assemble but also improve assembly accuracy.

In one embodiment, the plurality of illuminating elements 312 includes a first illuminating element 3121, a second illuminating element 3122, and a third illuminating element 3123, which respectively provide a first color beam C1, a second color beam C2, and a third color beam C3. The first dichroic element 21 is arranged toward the third illuminating element 3123, and the second dichroic element 22 is arranged toward the first illuminating element 3121 and the second illuminating element 3122. Specifically, the first dichroic element 21 is disposed on a first side of the holder 10, with the first side adjacent to the third illuminating element 3123, and the second dichroic element 22 is disposed on a second side of the holder 10, with the second side adjacent to the first illuminating element 3121 and the second illuminating element 3122, wherein the second side and the first side are opposite sides of the holder 10. The first illuminating element 3121, the second illuminating element 3122, and the third illuminating element 3123 may each be a solid-state light source, such as one or more light-emitting diodes (LEDs), but are not limited thereto. In other embodiments, the first illuminating element 3121, the second illuminating element 3122, and the third illuminating element 3123 may each be one or more laser diodes (LDs), one or more LEDs, or a combination of laser diodes and LEDs.

In one embodiment, the first color beam C1 may be a blue light beam, the second color beam C2 may be a red light beam, and the third color beam C3 may be a green light beam. In other embodiments, the first color beam C1 may be a blue light beam, the second color beam C2 may be a green light beam, and the third color beam C3 may be a red light beam. The present disclosure is not limited to the above color arrangements.

In one embodiment, the first dichroic element 21 is configured to reflect the first color beam C1 and allow the third color beam C3 to transmit therethrough, while the second dichroic element 22 is configured to reflect the second color beam C2 and allow the third color beam C3 to transmit therethrough. Specifically, the third color beam C3 enters the dichroic module 20 from the first side and passes through the dichroic module 20, whereas the first color beam C1 and the second color beam C2 enter the dichroic module 20 from the second side and are reflected by the dichroic module 20. As a result, the optical paths of the first color beam C1 and the second color beam C2 are redirected. The reflected first color beam C1 and the reflected second color beam C2 are combined with the transmitted third color beam C3, and after passing through other optical elements, at least one of the first color beam C1, second color beam C2, and third color beam C3 serves as the illuminating beam L1 to output.

By providing two dichroic elements that respectively abut against the first bearing surface of the first bearing part and the second bearing surface of the second bearing part, when the two dichroic elements are positioned against the first bearing surface and the second bearing surface, the first bearing surface and the second bearing surface are located on the first reference surface and the second reference surface defining an intersection angle. This configuration ensures that the two dichroic elements also have an intersection angle relative to each other, thereby meeting optical path design requirements. The intersection angle of the holder can be adjusted to accommodate mold-making requirements, facilitating easier fabrication with high precision. Furthermore, the design of the first bearing part and the second bearing part increases the contact area between the dichroic elements and the holder, enhancing fixation stability. The holder enables the two dichroic elements to form a dichroic module, which can be readily assembled within the projection device's base. The first fixing part and the second fixing part of the holder further improve assembly precision.

In summary, the holder of the present embodiment has at least one of the following advantages: compared to the conventional single-piece dichroic element configuration, it can reduce component manufacturing costs; and compared to the conventional two-piece dichroic element configuration, it can increase assembly stability, improve assembly precision, and facilitate assembly.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The use of "at least one of...and..." thereof herein may include "one or more of the items contained in the list". For example, the use of "at least one of A and B" thereof herein may include only A, or only B, or A and B. Similarly, the use of "at least one of A, B, and C" thereof herein may include only A, or only B, or only C, or any combination of A, B, and C. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A holder (10) for securing two dichroic elements (21, 22), the holder (10) comprising:
a main body (11), the main body (11) being a frame having a penetrating hole (111), the main body (11) having a first terminal (112) and a second terminal (113) opposite to each other along a first axial direction (X);
a first fixing part (12), extending outward from the first terminal (112) of the main body (11) along the first axial direction (X);
a second fixing part (13), extending outward from the second terminal (113) of the main body (11) along the first axial direction (X), wherein the penetrating hole (111) is located between the first fixing part (12) and the second fixing part (13);
a first bearing part (14), disposed on the main body (11) and extending from an inner wall (114) of the main body (11) toward the penetrating hole (111), the first bearing part (14) having a first bearing surface (141); and
a second bearing part (15), disposed on the main body (11) and extending from the inner wall (114) of the main body (11) toward the penetrating hole (111), the second bearing part (15) having a second bearing surface (151).

2. The holder according to claim 1, wherein the first bearing surface (141) is located on a first reference surface (P1), the second bearing surface (151) is located on a second reference surface (P2), and an intersection angle (θ) is defined between the first reference surface (P1) and the second reference surface (P2).

3. The holder according to claim 1 or 2, wherein the first bearing part (14) defines a first opening (142) on the first reference surface (P1), and the second bearing part (15) defines a second opening (152) on the second reference surface (P2), preferably an area of the first opening (142) is greater than an area of the second opening (152).

4. The holder according to claim 1, 2 or 3, wherein a connection between the first bearing surface (141) and the inner wall (114) near the first terminal (111) defines a first junction (J1), a connection between the second bearing surface (151) and the inner wall (114) near the first terminal (111) defines a second junction (J2), and an inner wall height (H1) is defined between the first junction (J1) and the second junction (J2).

5. The holder according to any one of the preceding claims, further comprising a plurality of bumps (16) respectively disposed on the main body (11) and protruding from the inner wall (114) of the main body (11) toward the penetrating hole (111) along a second axial direction (Y).

6. The holder according to claim 5, wherein along the second axial direction (Y), the plurality of bumps (16) protrude from the inner wall (114) by a first protrusion height (W1) that is less than a second protrusion height (W2) by which the second bearing part (15) protrudes from the inner wall (114), and the first axial direction (X) is perpendicular to the second axial direction (Y).

7. The holder according to claim 5 or 6, wherein the plurality of bumps (16) are respectively connected to the first bearing part (14) such that the first bearing part (14) and the plurality of bumps (16) form a plurality of first filling surfaces (143) connected to the first bearing surface (141) on the first reference surface (P1), and the second bearing part (15) and the plurality of bumps (16) form a plurality of second filling surfaces (153) connected to the second bearing surface (151) on the second reference surface (P2).

8. The holder according to any one of the preceding claims, wherein the intersection angle (θ) is between 6.3° and 7.2°.

9. A dichroic module, comprising:
the holder (10) according to any one of the preceding claims;
a first dichroic element (21) disposed on the holder (10) and abutting against the first bearing surface (141) of the first bearing part (14); and
a second dichroic element (22) disposed on the holder (10) and abutting against the second bearing surface (151) of the second bearing part (15).

10. The dichroic module according to claim 9, wherein a size of the second dichroic element (22) is smaller than a size of the first dichroic element (21).

11. The dichroic module according to claim 9 or 10, the inner wall height (H1) is greater than or equal to a height of the second dichroic element (22).

12. The dichroic module according to claim 9, 10 or 11, wherein the plurality of first filling surfaces (143), the first dichroic element (21), and the inner wall (114) of the main body (11) together form a plurality of first filling grooves (115), the plurality of first filling grooves (115) being configured to receive an adhesive for securing the first dichroic element (21), and the plurality of second filling surfaces (153), the second dichroic element (22), and the inner wall (114) of the main body (11) together form a plurality of second filling grooves (116), the plurality of second filling grooves (116) being configured to receive another adhesive for securing the second dichroic element (22).

13. A projection device (30), comprising:
an illuminating module (31) configured to provide an illuminating beam (L1);
a light valve module (32), located in a transmission path of the illuminating beam (L1), and configured to convert the illuminating beam (L1) into an image beam (L2); and
a projection lens (33), located in a transmission path of the image beam (L2), and configured to project the image beam (L2) out of the projection device (30),
wherein the illuminating module (31) comprises:
a base (311) having an accommodation space (S);
a plurality of illuminating elements (312), respectively disposed on an outer wall of the base (311), the plurality of illuminating elements (312) being configured to provide a first color beam (C1), a second color beam (C2), and a third color beam (C3) toward the accommodation space (S);
the holder (10) according to any one of the preceding claims 1 - 8, disposed in the accommodation space (S) of the base (311), the holder (10) being mounted within the base (311) via the first fixing part (12) and the second fixing part (13);
a first dichroic element (21), disposed on the holder (10) and abutting against the first bearing surface (141) of the first bearing part (14); and
a second dichroic element (22), disposed on the holder (10) and abutting against the second bearing surface (151) of the second bearing part (15),
wherein the first dichroic element (21), the second dichroic element (22), and the holder (10) form a dichroic module (20), the dichroic module (20) being located in a transmission path of the first color beam (C1), the second color beam (C2), and the third color beam (C3), such that the first color beam (C1), the second color beam (C2), and the third color beam (C3) are combined by the dichroic module (20) to form the illuminating beam (L1).

14. The projection device according to claim 13, wherein the plurality of illuminating elements (312) comprise a first illuminating element (3121), a second illuminating element (3122), and a third illuminating element (3123), configured to respectively provide the first color beam (C1), the second color beam (C2), and the third color beam (C3), the first dichroic element (21) being arranged toward the third illuminating element (3123), and the second dichroic element (22) being arranged toward the first illuminating element (3121) and the second illuminating element (3122).

15. The projection device according to claim 13 or 14, wherein the first dichroic element (21) is configured to reflect the first color beam (C1) and transmitted by the third color beam (C3), and the second dichroic element (22) is configured to reflect the second color beam (C2) and transmitted by the third color beam (C3).
